# FASCICULE DE BREVET EUROPEEN

(11) **EP 3 830 526 B1**
(45) Date de publication et mention de la délivrance du brevet: **08.03.2023**
(21) Numéro de dépôt: 19726019.3
(22) Date de dépôt: 28.05.2019
(51) Int. Cl.: G01D 5/16, B60S 1/08, G01D 5/165, G01D 5/25

(54) **MOTEUR ELECTRIQUE A COURANT CONTINU, MOTO-REDUCTEUR ET SYSTEME D'ESSUYAGE**
GLEICHSTROM-ELEKTROMOTOR, GETRIEBEMOTOR UND WISCHSYSTEM
DC-CURRENT ELECTRIC MOTOR, GEARED MOTOR AND WIPING SYSTEM

(30) Priorité: 01.08.2018 FR 1857208
(43) Date de publication de la demande: 09.06.2021
(73) Titulaire: Valeo Systèmes d'Essuyage, 78322 Le Mesnil Saint Denis (FR)
(72) Inventeur: HERRADA, Jose Luis, 78322 LE MESNIL SAINT DENIS CEDEX (FR); PASCHUTINE, Alexandre, 78322 LE MESNIL SAINT DENIS CEDEX (FR); LIU, Xiang, 78322 LE MESNIL SAINT DENIS CEDEX (FR); TREBOUET, Marcel, 78322 LE MESNIL SAINT DENIS CEDEX (FR)
(74) Mandataire: Valeo Visibility
(86) Numéro de dépôt international: PCT/EP2019/063776
(87) Numéro de publication internationale: WO 2020/025190

(56) Documents cités:
- EP-A1- 0 356 791
- FR-A1- 2 748 977
- FR-A1- 2 783 648
- FR-A1- 3 056 360
- US-A1- 2005 242 682
- US-A1- 2008 111 510

## Description

La présente invention concerne un moteur électrique à courant continu destiné notamment à des équipements de véhicule automobile.

Il est courant d'utiliser des moteurs électriques à courant continu dans les équipements de véhicules automobiles notamment dans les moto-réducteurs des dispositifs d'essuyage.

Les moteurs électriques à courant continu peuvent présenter de nombreux avantages comme une grande durée de vie, un encombrement, un coût et une consommation réduits.

Les moteurs électrique à courant continu à balais permettent une commande simple et ne nécessitent pas de connaître précisément la position du rotor en dehors de la position d'arrêt. Cette position d'arrêt est par exemple donnée par un dispositif de détection appelé « park finger » en anglais qui détecte la position du rotor à chaque tour du rotor.

Les documents US 2005/242682 A1 et US 2008/111510 A1 divulguent un moteur électrique avec trois balais.

Cependant, dans les systèmes d'essuyage récents, il peut être nécessaire de connaître la position des bras d'essuyage de manière plus précise par exemple pour déterminer les instants de pulvérisation d'un liquide de nettoyage dans le cas d'un dispositif de type « aquablade^{™} » (marque déposée) dans lequel un liquide de nettoyage est pulvérisé à partir du bras d'essuyage juste avant le passage du balai d'essuyage.

Cette position des bras d'essuyage peut être déterminée grâce à un capteur dédié mais le coût lié à ce capteur supplémentaire est alors important. Il est également connu d'utiliser un compteur ou incrémenteur (« timer » en anglais) pour estimer la position du rotor entre deux détections du « park finger » mais cette méthode est peu précise du fait que la vitesse des bras d'essuyage dépend de divers paramètres et notamment du coefficient de frottement du balai sur la vitre qui varie fortement en fonction de la quantité d'eau sur la vitre, de la présence de gel ou de l'état de saleté de la vitre.

Il convient donc de trouver une solution économique permettant de déterminer plus précisément la position des balais d'essuyage.

A cet effet, la présente invention concerne un moteur électrique à courant continu pour moto-réducteur, notamment pour un système d'essuyage d'un véhicule automobile, comprenant :
- un rotor comprenant un collecteur,
- un stator comprenant :
   - un premier balai de connexion destiné à être relié à la masse,
   - un deuxième balai de connexion destiné à être relié à une source de tension et associé à une première vitesse de rotation du moteur électrique,
   - un troisième balai de connexion destiné à être relié à une source de tension et associé à une deuxième vitesse de rotation du moteur électrique différente de la première vitesse,
      les balais de connexion étant configurés pour venir en contact avec le collecteur du rotor,
- une unité de commutation pour alimenter sélectivement le deuxième ou le troisième balai de connexion en fonction d'une commande d'un utilisateur,
- une unité de mesure configurée pour mesurer la tension entre le troisième balai de connexion et la masse lorsque le deuxième balai de connexion est alimenté et pour mesurer la tension entre le deuxième balai de connexion et la masse lorsque le troisième balai de connexion est alimenté,
- une unité de traitement configurée pour déterminer la position du rotor à partir des variations de la tension mesurée.

Selon un autre aspect de la présente invention, le collecteur comprend un ensemble de pistes conductrices s'étendant régulièrement sur le pourtour du collecteur et sur lesquelles viennent frotter les balais de connexion et dans lequel l'unité de traitement est configurée pour déterminer la position du rotor en fonction de la détection des surtensions produites par le passage du balai de connexion sur lequel est mesurée la tension, d'une piste conductrice du collecteur à une autre.

Selon un aspect supplémentaire de la présente invention, l'unité de traitement comprend un trigger de Schmitt configuré pour créer une série d'impulsions à partir de surtensions de la tension mesurée associées à des passages du balai de connexion d'une piste conductrice à une autre et un filtre disposé en amont du trigger de Schmitt et configuré pour mettre en forme le signal de la tension mesurée pour être exploitable par le trigger de Schmitt.

Selon un aspect additionnel de la présente invention, le moteur électrique comprend un dispositif de détection de la position du rotor à chaque tour du rotor et dans lequel l'unité de traitement est configurée pour déterminer des positions intermédiaires du rotor entre deux détections du dispositif de détection de la position du rotor.

Selon un autre aspect de la présente invention, le dispositif de détection de la position du rotor comprend une piste conductrice de forme générale circulaire et deux lames flexibles conductrices configurées pour venir en contact avec la piste conductrice, la piste conductrice comprenant une discontinuité locale et/ou une excroissance radiale locale de sorte à créer ou interrompre une connexion entre les deux lames flexibles.

La présente invention concerne également un moto-réducteur comprenant un moteur électrique tel que décrit précédemment et un mécanisme réducteur.

La présente invention concerne également un système d'essuyage d'un véhicule automobile comprenant un moto-réducteur tel que décrit précédemment, des bras d'essuyage, une tringlerie reliée d'une part au moto-réducteur et d'autre part aux bras d'essuyage et configurée pour permettre un mouvement de va-et-vient des bras d'essuyage, un réservoir de liquide de lavage et une pompe de lavage configurée pour permettre la pulvérisation du liquide de lavage via des buses de pulvérisation dans lequel l'unité de traitement est également configurée pour déterminer la position des bras d'essuyage et pour commander l'activation de ladite pompe de lavage en fonction de la position des bras d'essuyage déterminée.

Selon un autre aspect de la présente invention, l'unité de traitement comprend un compteur configuré pour compter les impulsions crées par le trigger de Schmitt et pour déterminer la position des balais d'essuyage à partir du nombre d'impulsions détectées à la sortie du trigger de Schmitt en multipliant le nombre d'impulsions détectées par le rapport de réduction du mécanisme de réduction.

Selon un aspect supplémentaire de la présente invention, les buses de pulvérisation sont positionnées sur les bras d'essuyage et sont configurées pour pulvériser d'un côté du bras d'essuyage et l'unité de traitement est configurée pour activer la pompe de lavage seulement lorsque les bras d'essuyage se déplacent vers le côté de pulvérisation.

Selon un aspect additionnel de la présente invention, le rapport de réduction du réducteur est 1/69 et le collecteur comprend douze pistes couvrant chacune un angle de 30° de sorte que la position des bras d'essuyage peut être déterminée avec une erreur de 0,43°.

Selon un autre aspect de la présente invention, l'unité de traitement est déportée à l'extérieur du moteur électrique.

La présente invention concerne également un connecteur électrique configuré pour être relié à un moteur électrique à courant continu pour moto-réducteur, notamment pour un système d'essuyage d'un véhicule automobile, ledit moteur électrique comprenant :
- un rotor comprenant un collecteur,
- un stator comprenant :
   - un premier balai de connexion destiné à être relié à la masse,
   - un deuxième balai de connexion destiné à être relié à une source de tension et associé à une première vitesse de rotation du moteur électrique,
   - un troisième balai de connexion destiné à être relié à une source de tension et associé à une deuxième vitesse de rotation du moteur électrique différente de la première vitesse,
      les balais de connexion étant configurés pour venir en contact avec le collecteur du rotor,
   - une unité de commutation pour alimenter sélectivement le deuxième ou le troisième balai de connexion en fonction d'une commande d'un utilisateur,
ledit connecteur électrique comprenant:
- au moins trois entrées/sorties configurées pour être reliées respectivement au premier, au deuxième et au troisième balais de connexion,
- une unité de mesure configurée pour mesurer la tension entre le troisième balai de connexion et la masse lorsque le deuxième balai de connexion est alimenté et pour mesurer la tension entre le deuxième balai de connexion et la masse lorsque le troisième balai de connexion est alimenté,
- une unité de traitement configurée pour déterminer la position du rotor à partir des variations de la tension mesurée.

Selon un autre aspect de la présente invention, le moteur électrique comprend un dispositif de détection de la position du rotor à chaque tour du rotor du moteur électrique configuré pour transmettre un signal associé à la position du rotor à chaque tour du rotor et le connecteur électrique comprend une quatrième entrée/sortie configurée pour être reliée audit dispositif de détection dans lequel l'unité de traitement est configurée pour déterminer des positions intermédiaires du rotor entre deux détections du dispositif de détection de la position du rotor.

Selon un aspect additionnel de la présente invention, le moteur électrique appartient à un système d'essuyage d'un véhicule automobile, ledit système d'essuyage comprenant un dispositif de pulvérisation d'un liquide de nettoyage comprenant une pompe et dans lequel le connecteur électrique comprend une entrée supplémentaire configurée pour recevoir un signal de commande d'une pulvérisation du liquide de nettoyage et une sortie supplémentaire configurée pour être reliée à la pompe, l'unité de traitement étant configurée pour transmettre un signal d'activation de la pompe vers la sortie en fonction du signal de commande reçu via l'entrée supplémentaire et de la position déterminée du rotor.

D'autres caractéristiques et avantages de l'invention ressortiront de la description suivante, donnée à titre d'exemple et sans caractère limitatif, en regard des dessins annexés sur lesquels :
- la figure 1 représente un schéma d'un moteur électrique à balais,
- la figure 2 représente une vue en perspective d'un collecteur,
- la figure 3 représente un schéma d'un dispositif de détection de la position du rotor,
- la figure 4 représente un schéma d'un signal issu du dispositif de détection de la position du rotor de la figure 1,
- la figure 5 représente un schéma électrique d'un filtre passe-bas et d'un trigger de Schmitt,
- la figure 6 représente différents signaux associés à différentes étapes de la détermination de la position du rotor,
- la figure 7 représente un schéma d'un exemple de réalisation d'un connecteur électrique comprenant une pluralité d'entrées/sorties,
- la figure 8 représente un schéma d'un exemple de réalisation d'un circuit électronique du connecteur de la figure 7,
- la figure 9 représente un schéma fonctionnel d'un connecteur électrique selon une première mode de réalisation de la présente invention, et
- la figure 10 représente un schéma fonctionnel d'un connecteur électrique selon une deuxième mode de réalisation de la présente invention.

Sur toutes les figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

La présente invention concerne un moteur électrique à courant continu à balais, par exemple un moteur électrique utilisé dans des équipements de véhicules automobiles comme les moto-réducteurs des dispositifs d'essuyage.

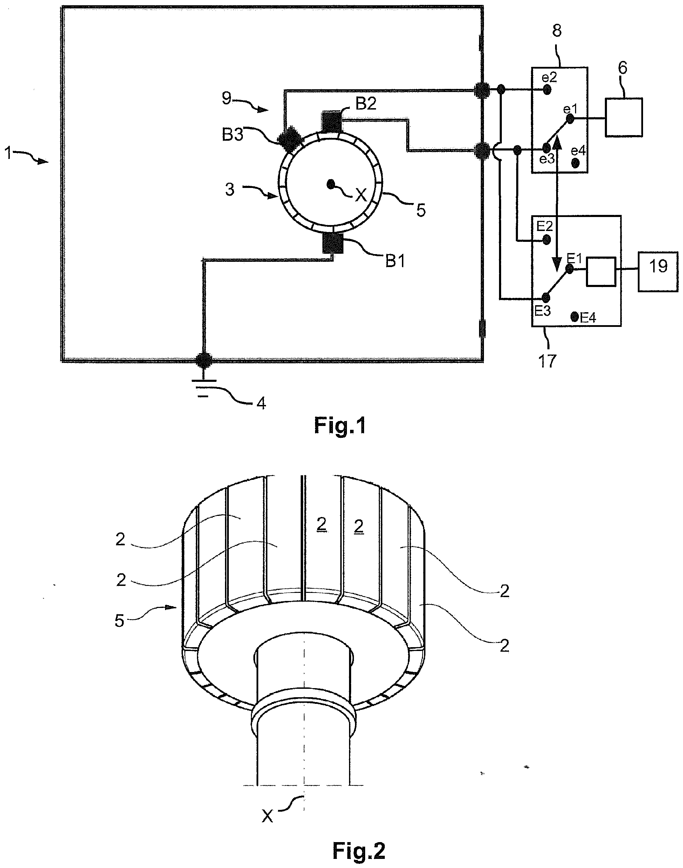

La figure 1 représente une vue schématique d'un moteur électrique 1 pour moto-réducteur comprenant un rotor 3 de forme cylindrique et monté rotatif autour d'un axe de rotation X. Le rotor 3 comprend un collecteur 5 (représenté en perspective sur la figure 2) comprenant une pluralité de pistes conductrices 2 s'étendant régulièrement sur le pourtour du collecteur 5. Les pistes conductrices 2 sont par exemple parallèles entre elles et s'entendent selon l'axe de rotation X du rotor 3.

Le moteur électrique 1 comprend également un stator 9 comprenant trois balais de connexion notés B1, B2 et B3 configurés pour venir frotter contre les pistes du collecteur 5.

Le premier balai de connexion B1 est destiné à être relié à la masse 4. Le deuxième balai de connexion B2 est disposé de manière diamétralement opposée (par rapport au centre du rotor 3) par rapport au premier balai de connexion B1 (l'angle formé par le premier balai B1, le centre de rotation du rotor 3 et le deuxième balai B2 est donc de 180°) et est destiné à être relié à une source de tension 6, par exemple la batterie du véhicule, pour permettre la mise en rotation du rotor 3 selon une première vitesse de rotation du moteur électrique 1.

Le troisième balai de connexion B3 est disposé de manière à former un angle inférieur à 180° par rapport à l'axe de rotation du rotor 3 et le premier balai de connexion B1, par exemple 160°, et est destiné à être relié à une source de tension 6, par exemple la batterie du véhicule. Le troisième balai de connexion B3 est associé à une deuxième vitesse de rotation du moteur électrique 1 différente de la première vitesse. La différence de vitesse entre la première et la deuxième vitesse est obtenue par la différence de position du deuxième balai de connexion B2 et du troisième balai de connexion B3 par rapport au premier balai B1 autour du collecteur 5 de sorte que la même source de tension 6 peut être utilisée pour alimenter le deuxième balai de connexion B2 et le troisième balai de connexion B3. En effet, lorsque le balai d'alimentation, ici B2, et le balai de masse B1 sont diamétralement opposés, la force du champ magnétique des inducteurs (situés au niveau du stator 9) agissant sur le bobinage de l'induit (situé au niveau du rotor 3) est maximale, la vitesse du moteur électrique 1 est donc ralentie tandis que lorsque le balai d'alimentation, ici B3, est décalé, la force du champ magnétique produit par les inducteurs sur le bobinage de l'induit est moindre et la vitesse de rotation du moteur électrique 1 est plus élevée.

Une unité de commutation 8 peut être disposée entre les deuxième B2 et troisième B3 balais et la source de tension 6 pour alimenter sélectivement le deuxième B2 ou le troisième B3 balai de connexion en fonction d'une commande d'un utilisateur. L'unité de commutation 8 comprend par exemple une borne de sortie e1 reliée à la source de tension 6 et trois bornes d'entrée e2, e3 et e4 reliées respectivement au deuxième balai B2, au troisième balai B3 et à une position d'arrêt. L'unité de commutation 8 comprend par exemple un interrupteur permettant de relier la borne de sortie e1 à l'une des bornes d'entrée e2, e3 ou e4. Ainsi, lorsque l'utilisateur sélectionne une première vitesse d'actionnement des balais d'essuyage, l'unité de commutation 8 relie le premier balai de connexion B1 à la source de tension 6 via la première borne d'entrée e2 et lorsque l'utilisateur sélectionne une deuxième vitesse d'essuyage supérieure à la première vitesse, l'unité de commutation 8 relie le deuxième balai de connexion B2 à la source de tension 6 via la deuxième borne d'entrée e3.

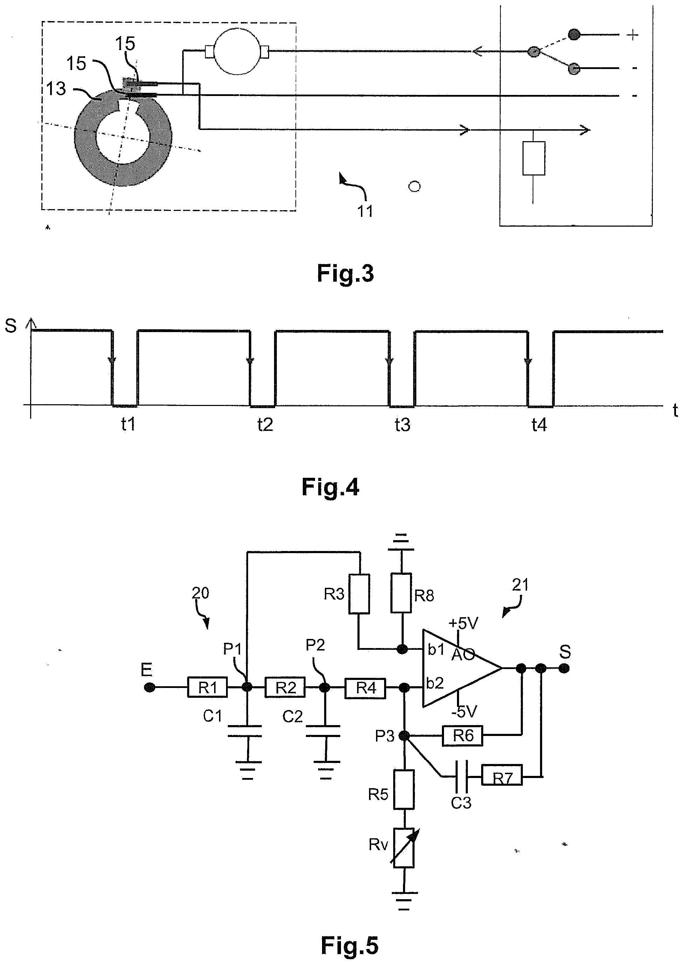

De plus, le moteur électrique 1 comprend également un dispositif de détection 11 de la position du rotor 3 représenté sur la figure 3. Le dispositif de détection 11 comprend une piste conductrice ou came 13 positionnée sur le rotor 3 et au moins une lame flexible 15 (ou doigt, « finger » en anglais), deux dans le cas présent, disposée(s) sur le stator 9 et configurée(s) pour venir en contact avec la piste conductrice 13, au moins dans certaines positions. La piste conductrice est par exemple de forme générale circulaire et comprend une discontinuité locale et/ou une excroissance radiale locale de sorte à créer ou interrompre une connexion. Dans le cas de la figure 2, la première lame flexible 15 est en contact permanent avec la piste conductrice tandis que la deuxième lame flexible 15 est en contact avec la piste conductrice seulement au niveau de l'excroissance radiale s'étend localement sur une portion restreinte du pourtour de la piste conductrice 13. Ainsi, la connexion entre les deux lames flexibles 15 est réalisée une fois par tour du rotor 3 lorsque la deuxième lame flexible 15 est située au niveau de l'excroissance de la piste conductrice 13. En alimentant l'une des deux lames flexibles 15 et en mesurant la tension au niveau de la deuxième lame flexible 15, il est possible de détecter le passage au niveau de l'excroissance radiale à chaque tour.

La figure 4 représente un exemple du signal S fourni par le dispositif de détection 11 au cours du temps t lors de l'actionnement du moteur électrique 1. Il est également possible d'établir d'autres configurations du dispositif de détection 11 permettant d'obtenir un signal équivalent permettant de connaître précisément la position du rotor 3 à chaque révolution du rotor 3. La position du rotor 3 est ici connue lors des impulsions du signal au niveau bas notées t1, t2, t3, t4....

De plus, pour connaître la position du rotor 3 à des instants intermédiaires, c'est-à-dire entre deux impulsions t1, t2... du signal au niveau bas sur la figure 3, le moteur électrique 1 comprend également une unité de mesure 17 (représentée sur la figure 1) configurée pour mesurer la tension entre le troisième balai de connexion B3 et la masse 4 lorsque le deuxième balai de connexion B2 est alimenté (relié à la source de tension 6 par l'unité de commutation 8) ou pour mesurer la tension entre le deuxième balai de connexion B2 et la masse 4 lorsque le troisième balai de connexion B3 est alimenté (relié à la source de tension 6 par l'unité de commutation 8). L'unité de mesure 17 comprend par exemple des moyens de commutation similaires à l'unité de commutation 8 et synchronisés avec l'unité de commutation 8 mais dont les bornes d'entrée E2 et E3 sont reliées respectivement aux troisième balai B3 et deuxième balai B2. La borne E4 est également une position d'arrêt. Le moteur électrique 1 comprend également une unité de traitement 19 configurée pour être reliée, directement ou via des éléments de traitement (convertisseur analogique-numérique ou éléments de mesure par exemple) à la borne de sortie E1 de l'unité de mesure 17 et pour déterminer la position du rotor 3 à partir des variations de la tension mesurée par l'unité de mesure 17.

En effet, lors du passage d'un balai de connexion non alimenté d'une piste conductrice 2 à une autre du collecteur 5, des surtensions sont créées.

Ainsi, la détection de ces surtensions permet de déterminer la position angulaire du rotor 3 à chaque passage d'une piste conductrice 2 à une autre. Si le collecteur 5 comprend par exemple 12 pistes conductrices, il est possible de connaître la position angulaire du rotor 3 tous les 30°.

En tenant compte du rapport de réduction du réducteur et de la géométrie de la tringlerie liée au dispositif d'essuyage, il est possible de déduire précisément la position du ou des bras d'essuyage et ainsi d'actionner la pulvérisation d'un liquide de lavage seulement pour certaines positions du bras d'essuyage.

L'unité de mesure 17 et l'unité de traitement 19 peuvent également être déportées à l'extérieur du moteur électrique 1 et être par exemple disposé dans un connecteur électrique 30 qui sera décrit plus en détail dans la suite de la description.

Afin de détecter les surtensions liées au passage d'un balai de connexion B2 ou B3 d'une piste conductrice du collecteur 5 à une autre, l'unité de traitement 19 peut comprendre un filtre, par exemple un filtre RC de type passe-bas configuré pour supprimer les tensions hautes fréquences parasites et mettre en forme le signal pour qu'il soit exploitable (par le trigger de Schmitt) et un trigger de Schmitt configuré pour fournir un signal « propre » dont les impulsions correspondent aux surtensions détectées de manière à émettre une impulsion à chaque détection d'une surtension correspondant au passage du balai de connexion B2 ou B3 d'une piste à une autre.

La figure 5 représente un exemple d'un circuit électronique comprenant un filtre passe-bas à deux niveaux 20 et un trigger de Schmitt 21. Le circuit électronique comprend une borne d'entrée notée E reliée à un premier point de connexion P1 via un première résistance R1, par exemple une résistance de 1,5 kΩ, Le point de connexion P1 est relié d'une part à la masse via un premier condensateur C1, par exemple un condensateur de 470 nF, d'autre part à un deuxième point de connexion P2 via une deuxième résistance R2, par exemple une résistance de 15 kΩ et d'autre part encore à une première borne b1 d'un amplificateur opérationnel AO via une troisième résistance R3, par exemple une résistance de 150 kΩ. Le deuxième point de connexion P2 est relié d'une part à la masse via un deuxième condensateur C2, par exemple un condensateur de 4,7 µF, et d'autre part à une deuxième borne b2 de l'amplificateur opérationnel AO via une quatrième résistance R4, par exemple une résistance de 150 kΩ. La première borne b1 est également reliée à un troisième point de connexion P3 qui est relié d'une part à la masse par une cinquième résistance R5, par exemple une résistance de 55 kΩ en série avec une résistance variable Rv, par exemple une résistance d'environ 10 kΩ et d'autre part à la sortie de l'amplificateur opérationnel AO via une première branche comprenant une sixième résistance R6, par exemple une résistance de 150 kΩ disposée en parallèle avec une deuxième branche comprenant un troisième condensateur C3, par exemple un condensateur de 10 nF, en série avec une septième résistance R7, par exemple une résistance de 55 kΩ. La première borne b1 de l'amplificateur opérationnel AO est également reliée à la masse via une huitième résistance R8, par exemple une résistance de 55 kΩ et la sortie de l'amplificateur opérationnel AO est reliée à la borne de sortie S du trigger de Schmitt 21.

L'unité de traitement 19 peut également comprendre un compteur configuré pour sommer les impulsions fournies par le trigger de Schmitt 21 entre deux impulsions fournies par le dispositif de détection 11 et pour déterminer la position du rotor 3 à partir de la valeur obtenue, du nombre de pistes conductrices du collecteur 5 et du rapport de réduction du mécanisme réducteur.

Un tel circuit électronique permet de détecter les surtensions associées au passage du balai de connexion B2 ou B3 d'une piste conductrice à une autre. Ainsi, l'unité de traitement 19 permet, en comptant les différentes surtensions apparaissant entre le balai de connexion B2 ou B3 non alimenté et le balai de masse B1, de déterminer la position des bras d'essuyage de manière précise sans nécessiter de capteur supplémentaire. Cette détection de la position du rotor 3 à chaque surtension liée au passage du balai de connexion non alimenté B2 ou B3 d'une piste conductrice 2 à une autre peut être combinée avec le signal fourni par le dispositif de détection 11 de la position du rotor 3 fournissant une information de position à chaque révolution du rotor 3 pour obtenir une détermination précise de la position des balais d'essuyage afin de pouvoir actionner une pompe pour la pulvérisation d'un liquide de nettoyage sur le pare-brise seulement dans les positions désirées des balais d'essuyage.

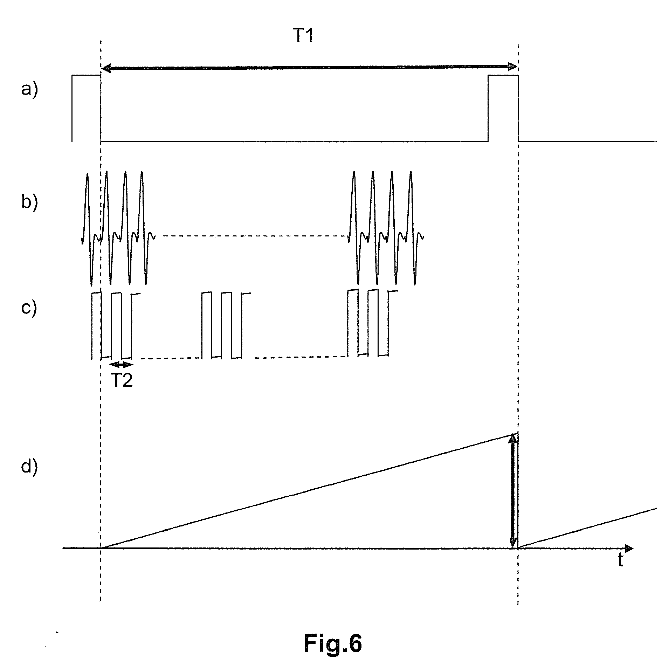

La figure 6 représente les différents signaux utilisés pour la détermination de la position du rotor 3 au cours du temps lors de la rotation du rotor 3. La figure 6 a) représente le signal (ou l'inverse du signal) fourni par le dispositif de détection 11 de la position du rotor 3 de la figure 3 (signal correspondant au signal de la figure 4 (à son inverse dans le cas présent)). On a donc une impulsion par tour de rotor 3. Le temps T1 correspond donc à un tour de rotor 3. La figure 6b) représente le signal détecté sur le balai de connexion non alimenté. La figure 6c) représente le signal détecté sur le balai de connexion non alimenté après filtrage et mise en forme par le trigger de Schmitt 21. Le temps T2 entre deux impulsions correspond au temps nécessaire pour que deux interstices (entre deux pistes conductrices 4) successifs se retrouvent en contact avec le balai de connexion non alimenté.

La figure 6d) représente un compteur dont la valeur correspond au nombre d'impulsions détectées depuis la dernière impulsion du dispositif de détection 11 multiplié par le rapport de réduction du mécanisme réducteur utilisé pour relier la sortie du moteur électrique aux bras d'essuie-glace. Ce compteur permet ainsi à partir du nombre de pistes conductrices 2 du collecteur 5 d'estimer de panière précise la position du balai d'essuyage.

La présente invention concerne également un moto-réducteur comprenant un moteur électrique tel que décrit précédemment et un mécanisme réducteur associé à un rapport de réduction prédéterminé, par exemple 1:69. Avec un collecteur 5 comprenant douze pistes conductrices 2 et couvrant donc chacune 30°, la position d'un bras d'essuyage peut être déterminée avec une erreur de 0,43°.

La présente invention concerne également un système d'essuyage pour véhicule automobile comprenant un moto-réducteur tel que décrit précédemment, des bras d'essuyage sur lesquels sont montés les balais d'essuyage, une tringlerie reliée d'une part au moto-réducteur et d'autre part aux bras d'essuyage et configurée pour permettre un mouvement de va-et-vient des bras d'essuyage, un réservoir de liquide de lavage et une pompe de lavage configurée pour permettre la pulvérisation du liquide de lavage via des buses de pulvérisation. Les buses de pulvérisation sont par exemple disposées au niveau des bras d'essuyage et orientées sur un côté du bras d'essuyage de manière à pulvériser le liquide de nettoyage sur le pare-brise juste avant le passage du balai d'essuyage.

L'actionnement de la pompe est commandé par l'unité de traitement 19 qui est située au niveau du moteur électrique 1 ou déportée, par exemple au niveau d'un ordinateur de bord du véhicule. L'unité de traitement 19 est configurée pour déterminer la position des bras d'essuyage à partir des signaux fournis par l'unité de mesure 17 (qui peut également être disposée au niveau du moteur électrique 1 ou déportée par exemple au niveau de l'ordinateur de bord du véhicule) et pour commander l'activation de ladite pompe de lavage en fonction de la position des bras d'essuyage déterminée. Ainsi, la pompe est activée seulement lorsque le bras d'essuyage se déplace dans la direction de pulvérisation des buses de pulvérisation de sorte que l'essuyage du liquide est réalisé juste après la pulvérisation de manière à limiter la surface du pare-brise sur laquelle le liquide de nettoyage est pulvérisé afin de maximiser la visibilité pour le conducteur.

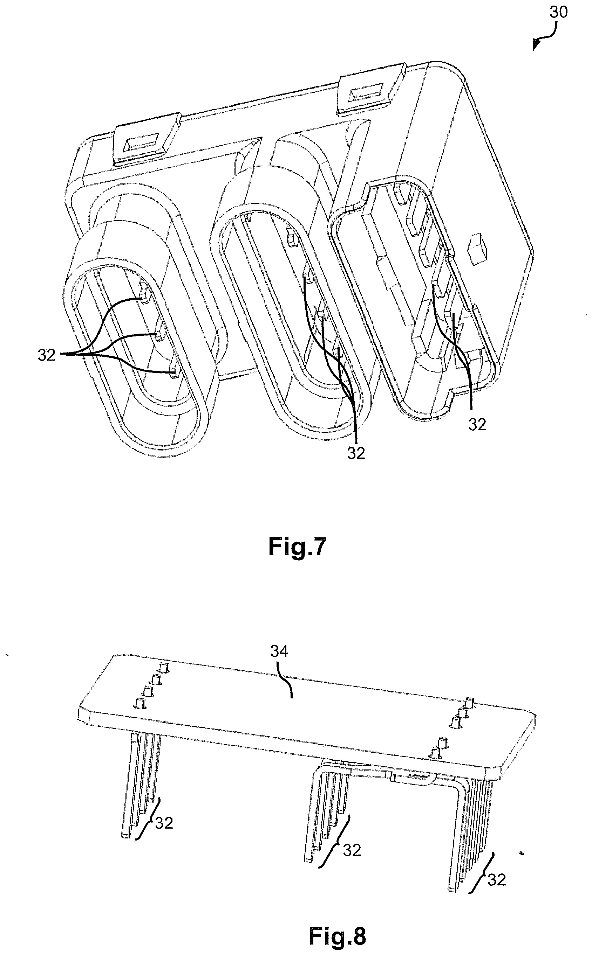

La présente invention concerne également un connecteur électrique. La figure 7 représente un exemple de connecteur électrique 30 comprenant une pluralité d'entrées/sorties réalisées par exemple par une pluralité de broches 32 destinées à être reliées à une carte à circuit imprimé 34 (visible sur la figure 8) comprenant une unité de mesure et une unité de traitement.

Le connecteur électrique 30 est par exemple configuré pour être disposé au niveau d'une connexion électrique entre l'unité du système d'essuyage, par exemple un ordinateur de bord du véhicule, et le moteur électrique du système d'essuyage. Les différentes broches 32 peuvent être utilisées comme entrée ou sortie pour le circuit imprimé 34. Ainsi, les broches 32 peuvent être regroupées en trois faisceaux, un premier faisceau destiné à être relié à une unité de commande du système d'essuyage tel qu'un ordinateur de bord du véhicule fournissant les différents signaux de commande du moteur électrique 1, un deuxième faisceau destiné à être relié au moteur électrique 1 (les broches du premier faisceau et du deuxième faisceau pouvant être reliées entre elles respectivement) et un troisième faisceau destiné à être relié à une pompe du dispositif de pulvérisation.

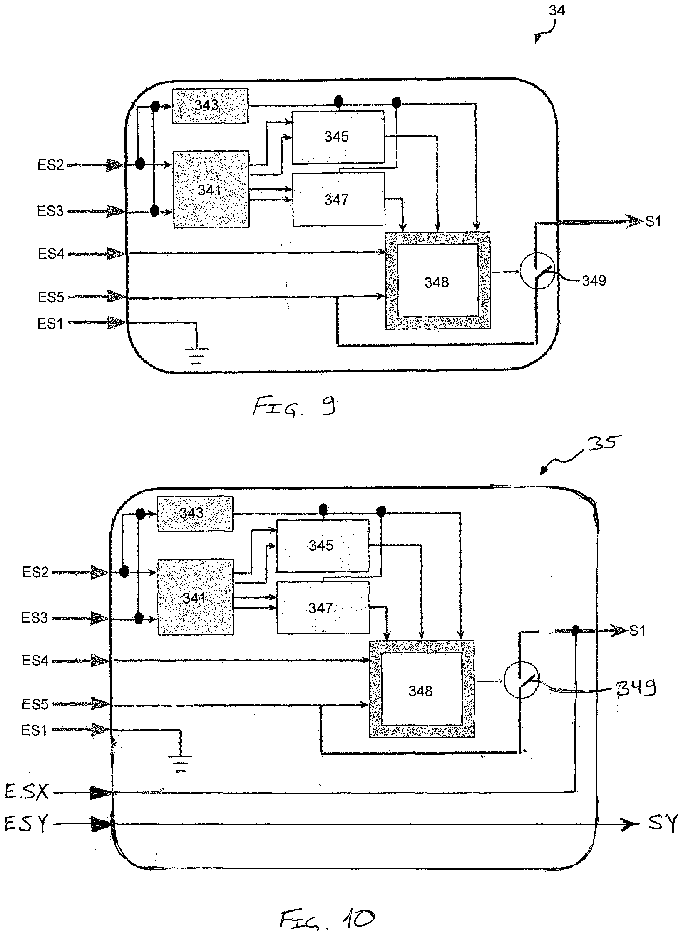

La figure 9 représente un exemple de réalisation des fonctions réalisées par le connecteur électrique 34, selon une première mode exemplaire de réalisation de l'invention. Ces fonctions correspondent aux fonctions réalisées par les unités de mesure 17 et de traitement 19 décrites précédemment.

Dans ce mode de réalisation, le circuit imprimé 34 comprend une première entrée/sortie es1 configurée pour être reliée au premier balai de connexion B1, c'est-à-dire à la masse, une deuxième entrée/sortie es2 configurée pour être reliée au deuxième balai de connexion B2, une troisième entrée/sortie es3 configurée pour être reliée au troisième balai de connexion B3, une quatrième entrée/sortie es4 configurée pour être reliée au dispositif de détection 11 de la position du rotor 3 et une cinquième entrée/sortie es5 configurée pour recevoir un signal de commande d'activation de la pompe associée à la pulvérisation. La deuxième entrée/sortie es2 et la troisième entrée/sortie es3 sont configurées pour être reliées d'une part à un filtre 341 et d'autre part à un régulateur de tension 343 fournissant une tension Vcc à sa sortie.

Le filtre 341 fournit deux sorties S1 et S2 correspondant à une valeur crête et une valeur moyenne du signal associé au deuxième balai de connexion B2 et reliées à un premier comparateur 345 et deux sorties S3 et S4 correspondant à une valeur crête et une valeur moyenne du signal associé au troisième balai de connexion B3 et reliées à un deuxième comparateur 347. Les comparateurs comprennent également chacun une entrée reliée à la sortie du régulateur de tension 343. Leur rôle correspond au trigger de Schmitt 21 décrit précédemment.

La sortie du régulateur de tension 343, les sorties des comparateurs 345 et 347 ainsi que la quatrième entrée/sortie es4 et la cinquième entrée/sortie es5 sont reliées à un microcontrôleur 348. Le microcontrôleur 348 est configuré pour fournir un signal d'activation de la pompe en fonction du signal de commande de la pompe reçu sur l'entrée/sortie es5 et de la position du rotor 3 déterminée à partir des signaux fournis par les comparateurs 345 et 347. Le signal d'activation de la pompe est par exemple utilisé pour commander l'ouverture ou la fermeture d'un interrupteur 349 disposé au niveau d'une liaison entre la cinquième entrée sortie es5 et une sortie s1 d'activation de la pompe.

Ainsi, le signal es5 correspond à un signal de commande d'activation du dispositif de pulvérisation d'un liquide de nettoyage et le microcontrôleur 348 fournit un signal de sortie visant à fermer l'interrupteur 349 dans certaines positions des balais d'essuyage, notamment lorsque le bras d'essuyage se déplace dans la direction de pulvérisation des buses de pulvérisation (lorsque ces dernières sont disposées au niveau du balai d'essuyage) de sorte que l'essuyage du liquide est réalisé juste après la pulvérisation de manière à limiter la surface du pare-brise sur laquelle le liquide de nettoyage est pulvérisé afin de maximiser la visibilité pour le conducteur.

Le connecteur électrique 30 peut comprendre un nombre d'entrées/sorties différent du mode de réalisation représenté sur les figures 7 à 9, les entrées/sorties peuvent également prendre des formes différentes que des broches et les fonctions du connecteur peuvent être réalisées différemment que selon l'organisation de la figure 9.

Par ailleurs, il pourrait être envisagé que le connecteur comprend des connexions en plus de ce qui est illustré dans les figures 7 à 9, afin de réaliser des fonctions supplémentaires, au-delà de celles racontées ci-dessus. Une telle mode de réalisation est illustrée dans la figure 10.

Dans la figure 10, il est illustré un connecteur 35, qui comprend une entrée/sortie supplémentaire ESX, en plus des autres entrées/sorties décrites ci-dessus. L'entrée/sortie ESX est reliée directement à la sortie S1, contournant l'interrupteur 349. La sortie S1 pourrait donc être connecté de manière direct à une source de courant, permettant l'activation en continu la pompe sans activer le dispositif de la présente invention sans regard pour la position des balais.

Une telle configuration pourrait obtenir des avantages supplémentaires. Par exemple, il est connu un type de pompe dit « bidirectionnelle », comprenant deux sorties ; la sortie par laquelle le fluide s'éjecte étant en fonction de la direction du moteur de la pompe et donc de la polarité de son alimentation. Ces deux sorties peuvent alimenter deux buses (ou bien deux jeux de buses) de pulvérisation ; par exemple une première agencée pour arroser la pare-brise et une deuxième pour arroser la vitre arrière, les phares, un capteur, etc.

Dans une utilisation exemplaire du connecteur de la figure 10, une telle pompe (non-illustré) est alimentée par la sortie S1. En énergisant la pompe à une tension positive par l'ES5 on active le système de détermination de position de l'invention et fait tourner la pompe pour qu'elle projette de l'eau sur la pare-brise de manière sélective, telle que décrit ci-dessus. Contrairement, en l'énergisant à une tension négative par l'entrée/sortie supplémentaire ESX le système de détermination de position reste inactive et la pompe tourne en continu, en sens inverse, pour qu'elle projette de l'eau sur une autre surface telle qu'une verre arrière. Le connecteur électrique 30 de l'invention permet donc la réalisation des fonctionnalités supplémentaires de manière simple et économe.

Des conducteurs additionnels pourraient aussi être envisagés et fournis dans la même manière que celui décrit ci-dessus, au lieu de ou en complément aux conducteurs de courant, selon les besoins de l'utilisateur. Par exemple, dans le connecteur de la figure 10 il y a aussi une entrée/sortie supplémentaire ESY qui est reliée directement à la sortie SY, et qui pourrait être employée pour passer e.g. un signal de contrôle ou de pilotage (tel qu'un signal PWM) ou un courant d'alimentation pour alimenter ou piloter des fonctions optionnelles ou supplémentaires telle qu'un élément de chauffage intégré dans le balai d'essuyage.

L'utilisation d'un tel connecteur électrique 30 permet d'obtenir une commande efficace d'un dispositif de pulvérisation d'un liquide de nettoyage nécessitant de connaître précisément la position du rotor pour déterminer la position du bras d'essuyage sans nécessiter de capteur supplémentaire et sans avoir à modifier le moteur électrique existant à courant continu de l'état de la technique.

Ainsi, la mesure de la tension au niveau du balai de connexion non alimenté permet de déterminer de manière précise la position des balais d'essuyage sans avoir à utiliser un capteur supplémentaire et donc pour un coût très réduit.

## Revendications

1. Moteur électrique (1) à courant continu pour moto-réducteur, notamment pour un système d'essuyage d'un véhicule automobile, comprenant :
- un rotor (3) comprenant un collecteur (5),
- un stator (9) comprenant :
- un premier balai de connexion (B1) destiné à être relié à la masse (4),
- un deuxième balai de connexion (B2) destiné à être relié à une source de tension (6) et associé à une première vitesse de rotation du moteur électrique (1),
- un troisième balai de connexion (B3) destiné à être relié à une source de tension (6) et associé à une deuxième vitesse de rotation du moteur électrique (1) différente de la première vitesse,
les balais de connexion (B1, B2, B3) étant configurés pour venir en contact avec le collecteur (5) du rotor (3),
- une unité de commutation (8) pour alimenter sélectivement le deuxième (B2) ou le troisième (B3) balai de connexion en fonction d'une commande d'un utilisateur, **caractérisé en ce que** le moteur électrique (1) comprend également
- une unité de mesure (17) configurée pour mesurer la tension entre le troisième balai de connexion (B3) et la masse (4) lorsque le deuxième balai de connexion (B2) est alimenté et pour mesurer la tension entre le deuxième balai de connexion (B2) et la masse (4) lorsque le troisième balai de connexion (B3) est alimenté,
- une unité de traitement (19) configurée pour déterminer la position du rotor (3) à partir des variations de la tension mesurée.

2. Moteur électrique (1) selon la revendication 1 dans lequel le collecteur (5) comprend un ensemble de pistes conductrices (2) s'étendant régulièrement sur le pourtour du collecteur (5) et sur lesquelles viennent frotter les balais de connexion (B1, B2, B3) et dans lequel l'unité de traitement (19) est configurée pour déterminer la position du rotor (3) en fonction de la détection des surtensions produites par le passage du balai de connexion (B2, B3) sur lequel est mesurée la tension, d'une piste du collecteur à une autre.

3. Moteur électrique (1) selon la revendication 2 dans lequel l'unité de traitement (19) comprend un trigger de Schmitt (21) configuré pour créer une série d'impulsions à partir de surtensions de la tension mesurée associées à des passages du balai de connexion d'une piste conductrice (2) à une autre et un filtre (20) disposé en amont du trigger de Schmitt et configuré pour mettre en forme le signal de la tension mesurée pour être exploitable par le trigger de Schmitt (21).

4. Moteur électrique (1) selon l'une des revendications précédentes dans lequel le moteur électrique (1) comprend un dispositif de détection (11) de la position du rotor (3) à chaque tour du rotor (3) et dans lequel l'unité de traitement (19) est configurée pour déterminer des positions intermédiaires du rotor (3) entre deux détections du dispositif de détection (11) de la position du rotor (3).

5. Moteur électrique (1) selon la revendication 4 dans lequel le dispositif de détection (11) de la position du rotor (3) comprend une piste conductrice (13) de forme générale circulaire et deux lames flexibles conductrices (15) configurées pour venir en contact avec la piste conductrice (13), la piste conductrice (13) comprenant une discontinuité locale et/ou une excroissance radiale locale de sorte à créer ou interrompre une connexion entre les deux lames flexibles (15).

6. Moto-réducteur comprenant un moteur électrique (1) selon l'une des revendications précédentes et un mécanisme réducteur.

7. Système d'essuyage d'un véhicule automobile comprenant un moto-réducteur selon la revendication précédente, des bras d'essuyage, une tringlerie reliée d'une part au moto-réducteur et d'autre part aux bras d'essuyage et configurée pour permettre un mouvement de va-et-vient des bras d'essuyage, un réservoir de liquide de lavage et une pompe de lavage configurée pour permettre la pulvérisation du liquide de lavage via des buses de pulvérisation dans lequel l'unité de traitement (19) est également configurée pour déterminer la position des bras d'essuyage et pour commander l'activation de ladite pompe de lavage en fonction de la position des bras d'essuyage déterminée.

8. Système d'essuyage selon la revendication précédente en combinaison avec la revendication 3 dans lequel l'unité de traitement (19) comprend un compteur configuré pour compter les impulsions crées par le trigger de Schmitt (21) et pour déterminer la position des balais d'essuyage à partir du nombre d'impulsions détectées à la sortie du trigger de Schmitt (21) en multipliant le nombre d'impulsions détectées par le rapport de réduction du mécanisme de réduction.

9. Système d'essuyage selon la revendication 7 ou 8 dans lequel les buses de pulvérisation sont positionnées sur les bras d'essuyage et sont configurées pour pulvériser d'un côté du bras d'essuyage et dans lequel l'unité de traitement (19) est configurée pour activer la pompe de lavage seulement lorsque les bras d'essuyage se déplacent vers le côté de pulvérisation.

10. Système d'essuyage selon l'une des revendications 7 à 9 dans lequel le rapport de réduction du réducteur est 1/69 et le collecteur comprend 12 pistes couvrant chacune un angle de 30° de sorte que la position des bras d'essuyage peut être déterminée avec une erreur de 0,43°.

11. Système d'essuyage selon l'une des revendications 7 à 10 dans lequel l'unité de traitement (19) est déportée à l'extérieur du moteur électrique (1).

12. Connecteur électrique configuré pour être relié à un moteur électrique à courant continu pour moto-réducteur, notamment pour un système d'essuyage d'un véhicule automobile, ledit moteur électrique comprenant :
- un rotor (3) comprenant un collecteur (5),
- un stator (9) comprenant :
- un premier balai de connexion (B1) destiné à être relié à la masse (4),
- un deuxième balai de connexion (B2) destiné à être relié à une source de tension (6) et associé à une première vitesse de rotation du moteur électrique (1),
- un troisième balai de connexion (B3) destiné à être relié à une source de tension (6) et associé à une deuxième vitesse de rotation du moteur électrique (1) différente de la première vitesse,
les balais de connexion (B1, B2, B3) étant configurés pour venir en contact avec le collecteur (5) du rotor (3),
- une unité de commutation (8) pour alimenter sélectivement le deuxième (B2) ou le troisième (B3) balai de connexion en fonction d'une commande d'un utilisateur,
**caractérisé en ce que** le connecteur électrique comprend :
- au moins trois entrées/sorties configurées pour être reliées respectivement au premier (B1), au deuxième (B2) et au troisième (B3) balais de connexion,
- une unité de mesure configurée pour mesurer la tension entre le troisième balai de connexion (B3) et la masse (4) lorsque le deuxième balai de connexion (B2) est alimenté et pour mesurer la tension entre le deuxième balai de connexion (B2) et la masse (4) lorsque le troisième balai de connexion (B3) est alimenté,
- une unité de traitement configurée pour déterminer la position du rotor (3) à partir des variations de la tension mesurée.

13. Connecteur électrique selon la revendication 12 dans lequel le moteur électrique comprend un dispositif de détection (11) de la position du rotor (3) à chaque tour du rotor (3) du moteur électrique (1) configuré pour transmettre un signal associé à la position du rotor à chaque tour du rotor et dans lequel le connecteur électrique comprend une quatrième entrée/sortie configurée pour être reliée audit dispositif de détection (11) et dans lequel l'unité de traitement est configurée pour déterminer des positions intermédiaires du rotor (3) entre deux détections du dispositif de détection (11) de la position du rotor (3).

14. Connecteur électrique selon l'une des revendications 12 ou 13 dans lequel le moteur électrique appartient à un système d'essuyage d'un véhicule automobile, ledit système d'essuyage comprenant un dispositif de pulvérisation d'un liquide de nettoyage comprenant une pompe et dans lequel le connecteur électrique comprend une entrée supplémentaire configurée pour recevoir un signal de commande d'une pulvérisation du liquide de nettoyage et une sortie supplémentaire configurée pour être reliée à la pompe, l'unité de traitement étant configurée pour transmettre un signal d'activation de la pompe vers la sortie en fonction du signal de commande reçu via l'entrée supplémentaire et de la position déterminée du rotor.

## Patentansprüche

1. Gleichstrom-Elektromotor (1) für Getriebemotor, insbesondere für ein Wischsystem eines Kraftfahrzeugs, umfassend:
- einen Rotor (3), der einen Kollektor (5) umfasst,
- einen Stator (9), umfassend:
o eine erste Anschlussbürste (B1) zur Verbindung mit der Masse (4),
o eine zweite Anschlussbürste (B2), die zur Verbindung mit einer Spannungsquelle (6) bestimmt und einer ersten Drehgeschwindigkeit des Elektromotors (1) zugeordnet ist,
o eine dritte Anschlussbürste (B3), die zur Verbindung mit einer Spannungsquelle (6) bestimmt und einer zweiten Drehgeschwindigkeit des Elektromotors (1), die sich von der ersten Geschwindigkeit unterscheidet, zugeordnet ist,
wobei die Anschlussbürsten (B1, B2, B3) dazu ausgebildet sind, mit dem Kollektor (5) des Rotors (3) in Kontakt zu treten,
- eine Kommutiereinheit (8) zur selektiven Stromversorgung der zweiten (B2) oder dritten (B3) Anschlussbürste in Abhängigkeit von einem Befehl eines Benutzers, **dadurch gekennzeichnet, dass** der Elektromotor (1) auch Folgendes umfasst
- eine Messeinheit (17), die dazu ausgebildet ist, die Spannung zwischen der dritten Anschlussbürste (B3) und der Masse (4) zu messen, wenn die zweite Anschlussbürste (B2) mit Strom versorgt wird, und die Spannung zwischen der zweiten Anschlussbürste (B2) und der Masse (4) zu messen, wenn die dritte Anschlussbürste (B3) mit Strom versorgt wird,
- eine Verarbeitungseinheit (19), die dazu ausgebildet ist, die Position des Rotors (3) anhand der Variationen der gemessenen Spannung zu bestimmen.

2. Elektromotor (1) nach Anspruch 1, wobei der Kollektor (5) eine Anordnung von Leiterbahnen (2) umfasst, die sich regelmäßig auf dem Umfang des Kollektors (5) erstrecken und auf denen die Anschlussbürsten (B1, B2, B3) reiben, und wobei die Verarbeitungseinheit (19) dazu ausgebildet ist, die Position des Rotors (3) in Abhängigkeit von der Detektion der Überspannungen zu bestimmen, die vom Wechsel der Anschlussbürste (B2, B3), an der die Spannung gemessen wird, von einer Bahn des Kollektors zu einer anderen erzeugt werden.

3. Elektromotor (1) nach Anspruch 2, wobei die Verarbeitungseinheit (19) einen Schmitt-Trigger (21), der dazu ausgebildet ist, eine Reihe von Impulsen anhand von Überspannungen der gemessenen Spannung zu erzeugen, die Wechseln der Anschlussbürste von einer Leiterbahn (2) zu einer anderen zugeordnet sind, und einen Filter (20) umfasst, der stromauf des Schmitt-Triggers angeordnet ist und dazu ausgebildet ist, das Signal der gemessenen Spannung so zu formen, dass es vom Schmitt-Trigger (21) nutzbar ist.

4. Elektromotor (1) nach einem der vorhergehenden Ansprüche, wobei der Elektromotor (1) eine Vorrichtung zur Detektion (11) der Position des Rotors (3) bei jeder Umdrehung des Rotors (3) umfasst, und wobei die Verarbeitungseinheit (19) dazu ausgebildet ist, Zwischenpositionen des Rotors (3) zwischen zwei Detektionen der Vorrichtung zur Detektion (11) der Position des Rotors (3) zu bestimmen.

5. Elektromotor (1) nach Anspruch 4, wobei die Vorrichtung zur Detektion (11) der Position des Rotors (3) eine allgemein kreisförmige Leiterbahn (13) und zwei biegsame leitende Streifen (15), die dazu ausgebildet sind, mit der Leiterbahn (13) in Kontakt zu treten, umfasst, wobei die Leiterbahn (13) eine lokale Unregelmäßigkeit und/oder einen lokalen Vorsprung umfasst, um eine Verbindung zwischen den zwei biegsamen Streifen (15) herzustellen oder zu unterbrechen.

6. Getriebemotor umfassend einen Elektromotor (1) nach einem der vorhergehenden Ansprüche und einen Untersetzungsmechanismus.

7. Wischsystem eines Kraftfahrzeugs umfassend einen Getriebemotor nach dem vorhergehenden Anspruch, Wischerarme, ein Gestänge, das einerseits mit dem Getriebemotor und andererseits mit den Wischerarmen verbunden ist und dazu ausgebildet ist, eine Hin-und-Herbewegung der Wischerarme zu ermöglichen, einen Vorratsbehälter für Waschflüssigkeit und eine Waschpumpe, die dazu ausgebildet ist, das Sprühen der Waschflüssigkeit über Sprühdüsen zu ermöglichen, wobei die Verarbeitungseinheit (19) ebenfalls dazu ausgebildet ist, die Position der Wischerarme zu bestimmen und die Aktivierung der Waschpumpe in Abhängigkeit von der bestimmten Position der Wischerarme zu steuern.

8. Wischsystem nach dem vorhergehenden Anspruch in Kombination mit Anspruch 3, wobei die Verarbeitungseinheit (19) einen Zähler umfasst, der dazu ausgebildet ist, die Impulse zu zählen, die vom Schmitt-Trigger (21) erzeugt werden, und die Position der Wischerarme anhand der Anzahl von Impulsen zu bestimmen, die am Ausgang des Schmitt-Triggers (21) detektiert werden, indem die Anzahl von detektierten Impulsen mit dem Untersetzungsverhältnis des Untersetzungsmechanismus multipliziert wird.

9. Wischsystem nach Anspruch 7 oder 8, wobei die Sprühdüsen auf den Wischerarmen positioniert sind und dazu ausgebildet sind, auf einer Seite des Wischerarms zu sprühen, und wobei die Verarbeitungseinheit (19) dazu ausgebildet ist, die Waschpumpe nur dann zu aktivieren, wenn sich die Wischerarme zur Sprühseite hin bewegen.

10. Wischsystem nach einem der Ansprüche 7 bis 9, wobei das Untersetzungsverhältnis des Getriebes 1/69 beträgt und der Kollektor 12 Bahnen umfasst, die jeweils einen Winkel von 30° abdecken, so dass die Position der Wischerarme mit einem Fehler von 0,43° bestimmt werden kann.

11. Wischsystem nach einem der Ansprüche 7 bis 10, wobei die Verarbeitungseinheit (19) nach außerhalb des Elektromotors (1) versetzt ist.

12. Elektrischer Verbinder, der dazu ausgebildet ist, mit einem Gleichstrom-Elektromotor für ein Untersetzungsgetriebe verbunden zu sein, insbesondere für ein Wischsystem eines Kraftfahrzeugs, wobei der Elektromotor Folgendes umfasst:
- einen Rotor (3), der einen Kollektor (5) umfasst,
- einen Stator (9), umfassend:
o eine erste Anschlussbürste (B1) zur Verbindung mit der Masse (4),
o eine zweite Anschlussbürste (B2), die zur Verbindung mit einer Spannungsquelle (6) bestimmt und einer ersten Drehgeschwindigkeit des Elektromotors (1) zugeordnet ist,
o eine dritte Anschlussbürste (B3), die zur Verbindung mit einer Spannungsquelle (6) bestimmt und einer zweiten Drehgeschwindigkeit des Elektromotors (1), die sich von der ersten Geschwindigkeit unterscheidet, zugeordnet ist,
wobei die Anschlussbürsten (B1, B2, B3) dazu ausgebildet sind, mit dem Kollektor (5) des Rotors (3) in Kontakt zu treten,
- eine Kommutiereinheit (8) zur selektiven Stromversorgung der zweiten (B2) oder dritten (B3) Anschlussbürste in Abhängigkeit von einem Befehl eines Benutzers,
**dadurch gekennzeichnet, dass** der elektrische Verbinder Folgendes umfasst:
- wenigstens drei Ein-/Ausgänge, die dazu ausgebildet sind, mit der ersten (B1), zweiten (B2) bzw. dritten (B3) Anschlussbürste verbunden zu sein,
- eine Messeinheit, die dazu ausgebildet ist, die Spannung zwischen der dritten Anschlussbürste (B3) und der Masse (4) zu messen, wenn die zweite Anschlussbürste (B2) mit Strom versorgt wird, und die Spannung zwischen der zweiten Anschlussbürste (B2) und der Masse (4) zu messen, wenn die dritte Anschlussbürste (B3) mit Strom versorgt wird,
- eine Verarbeitungseinheit, die dazu ausgebildet ist, die Position des Rotors (3) anhand der Variationen der gemessenen Spannung zu bestimmen.

13. Elektrischer Verbinder nach Anspruch 12, wobei der Elektromotor eine Vorrichtung zur Detektion (11) der Position des Rotors (3) bei jeder Umdrehung des Rotors (3) des Elektromotors (1) umfasst, die dazu ausgebildet ist, ein Signal, das der Position des Rotors zugeordnet ist, bei jeder Umdrehung des Rotors zu übertragen, und wobei der elektrische Verbinder einen vierten Ein- /Ausgang umfasst, der dazu ausgebildet ist, mit der Detektionsvorrichtung (11) verbunden zu sein, und wobei die Verarbeitungseinheit dazu ausgebildet ist, Zwischenpositionen des Rotors (3) zwischen zwei Detektionen der Vorrichtung zur Detektion (11) der Position des Rotors (3) zu bestimmen.

14. Elektrischer Verbinder nach einem der Ansprüche 12 oder 13, wobei der Elektromotor zu einem Wischsystem eines Kraftfahrzeugs gehört, wobei das Wischsystem eine Vorrichtung zum Sprühen einer Reinigungsflüssigkeit umfasst, die eine Pumpe umfasst, und wobei der elektrische Verbinder einen zusätzlichen Eingang, der dazu ausgebildet ist, ein Signal zur Steuerung einer Versprühung der Reinigungsflüssigkeit zu empfangen, und einen zusätzlichen Ausgang umfasst, der dazu ausgebildet ist, mit der Pumpe verbunden zu sein, wobei die Verarbeitungseinheit dazu ausgebildet ist, je nach dem Steuersignal, das über den zusätzlichen Eingang empfangen wird, und der bestimmten Position des Rotors ein Signal zur Aktivierung der Pumpe an den Ausgang zu übertragen.

## Claims

1. A DC current electric motor (1) for a geared motor, in particular for a wiper system for a motor vehicle, comprising:
- a rotor (3) comprising a collector (5),
- a stator (9) comprising:
- a first connection brush (B1) intended to be connected to ground (4),
- a second connection brush (B2) intended to be connected to a voltage source (6) and associated with a first rotational speed of the electric motor (1),
- a third connection brush (B3) intended to be connected to a voltage source (6) and associated with a second rotational speed of the electric motor (1), different from the first speed,
the connection brushes (B1, B2, B3) being configured so as to come into contact with the collector (5) of the rotor (3),
- a switching unit (8) for selectively supplying power to the second (B2) or the third (B3) connection brush on the basis of a command from a user,
**characterized in that** the electric motor (1) also comprises
- a measurement unit (17) configured so as to measure the voltage between the third connection brush (B3) and ground (4) when the second connection brush (B2) is supplied with power and to measure the voltage between the second connection brush (B2) and ground (4) when the third connection brush (B3) is supplied with power,
- a processing unit (19) configured so as to determine the position of the rotor (3) from the variations in the measured voltage.

2. The electric motor (1) as claimed in claim 1, wherein the collector (5) comprises a set of conductor tracks (2) extending regularly around the periphery of the collector (5) and against which the connection brushes (B1, B2, B3) rub, and wherein the processing unit (19) is configured so as to determine the position of the rotor (3) on the basis of the detection of the overvoltages produced by the connection brush (B2, B3), on which the voltage is measured, passing from one conductor track of the collector to another.

3. The electric motor (1) as claimed in claim 2, wherein the processing unit (19) comprises a Schmitt trigger (21) configured so as to create a series of pulses from overvoltages of the measured voltage that are associated with the connection brush passing from one conductor track (2) to another, and a filter (20) arranged upstream of the Schmitt trigger and configured so as to shape the signal of the measured voltage so as to be able to be used by the Schmitt trigger (21).

4. The electric motor (1) as claimed in one of the preceding claims, wherein the electric motor (1) comprises a device (11) for detecting the position of the rotor (3) upon each revolution of the rotor (3), and wherein the processing unit (19) is configured so as to determine intermediate positions of the rotor (3) between two detections of the device (11) for detecting the position of the rotor (3).

5. The electric motor (1) as claimed in claim 4, wherein the device (11) for detecting the position of the rotor (3) comprises a conductor track (13) of generally circular shape and two flexible conductive tabs (15) configured so as to come into contact with the conductor track (13), the conductor track (13) comprising a local discontinuity and/or a local radial protuberance so as to create or interrupt a connection between the two flexible tabs (15).

6. A geared motor comprising an electric motor (1) as claimed in one of the preceding claims and a reduction mechanism.

7. A wiper system for a motor vehicle comprising a geared motor as claimed in the preceding claim, wiper arms, a linkage connected firstly to the geared motor and secondly to the wiper arms and configured so as to allow reciprocating motion of the wiper arms, a washing liquid reservoir and a washing pump configured so as to allow the washing liquid to be sprayed via spray nozzles, wherein the processing unit (19) is also configured so as to determine the position of the wiper arms and to control the activation of said washing pump on the basis of the determined position of the wiper arms.

8. The wiper system as claimed in the preceding claim in combination with claim 3, wherein the processing unit (19) comprises a counter configured so as to count the pulses created by the Schmitt trigger (21) and to determine the position of the wiper blades from the number of pulses detected at the output of the Schmitt trigger (21) by multiplying the number of pulses detected by the reduction ratio of the reduction mechanism.

9. The wiper system as claimed in claim 7 or 8, wherein the spray nozzles are positioned on the wiper arms and are configured so as to spray from one side of the wiper arm, and wherein the processing unit (19) is configured so as to activate the washing pump only when the wiper arms move toward the spraying side.

10. The wiper system as claimed in one of claims 7 to 9, wherein the reduction ratio of the reducer is 1/69 and the collector comprises 12 tracks each covering an angle of 30°, such that the position of the wiper arms may be determined with an error of 0.43°.

11. The wiper system as claimed in one of claims 7 to 10, wherein the processing unit (19) is remote, outside the electric motor (1).

12. An electrical connector configured so as to be connected to a DC current electric motor for a geared motor, in particular for a wiper system for a motor vehicle, said electric motor comprising:
- a rotor (3) comprising a collector (5),
- a stator (9) comprising:
- a first connection brush (B1) intended to be connected to ground (4),
- a second connection brush (B2) intended to be connected to a voltage source (6) and associated with a first rotational speed of the electric motor (1),
- a third connection brush (B3) intended to be connected to a voltage source (6) and associated with a second rotational speed of the electric motor (1), different from the first speed,
the connection brushes (B1, B2, B3) being configured so as to come into contact with the collector (5) of the rotor (3),
- a switching unit (8) for selectively supplying power to the second (B2) or the third (B3) connection brush on the basis of a command from a user,
**characterized in that** the electrical connector comprises:
- at least three inputs/outputs configured so as to be connected respectively to the first (B1), to the second (B2) and to the third (B3) connection brushes,
- a measurement unit configured so as to measure the voltage between the third connection brush (B3) and ground (4) when the second connection brush (B2) is supplied with power and to measure the voltage between the second connection brush (B2) and ground (4) when the third connection brush (B3) is supplied with power,
- a processing unit configured so as to determine the position of the rotor (3) from the variations in the measured voltage.

13. The electrical connector as claimed in claim 12, wherein the electric motor comprises a device (11) for detecting the position of the rotor (3) upon each revolution of the rotor (3) of the electric motor (1), configured so as to transmit a signal associated with the position of the rotor upon each revolution of the rotor, and wherein the electrical connector comprises a fourth input/output configured so as to be connected to said detection device (11), and wherein the processing unit is configured so as to determine intermediate positions of the rotor (3) between two detections of the device (11) for detecting the position of the rotor (3).

14. The electrical connector as claimed in either of claims 12 and 13, wherein the electric motor belongs to a wiper system for a motor vehicle, said wiper system comprising a device for spraying a cleaning liquid comprising a pump, and wherein the electrical connector comprises an additional input configured so as to receive a signal for controlling spraying of the cleaning liquid and an additional output configured so as to be connected to the pump, the processing unit being configured so as to transmit a pump activation signal to the output on the basis of the control signal received via the additional input and the determined position of the rotor.
